# EUROPEAN PATENT SPECIFICATION

(11) **EP 3 493 084 B1**
(45) Date of publication and mention of the grant of the patent: **03.11.2021**
(21) Application number: 18818792.6
(22) Date of filing: 03.04.2018
(51) Int. Cl.: G06F 16/901

(54) **METHOD FOR PROCESSING DATA IN BLOOM FILTER AND BLOOM FILTER**
VERFAHREN ZUR VERARBEITUNG VON DATEN IN EINEM BLOOM-FILTER SOWIE BLOOM-FILTER
PROCÉDÉ DE TRAITEMENT DE DONNÉES DANS UN FILTRE DE BLOOM ET FILTRE DE BLOOM

(30) Priority: 13.06.2017 CN 201710444590
(43) Date of publication of application: 05.06.2019
(73) Proprietor: Huawei Technologies Co., Ltd., Longgang District Shenzhen, Guangdong 518129 (CN)
(72) Inventor: WANG, Yi, Shenzhen, Guangdong 518129 (CN); LU, Jianyuan, Beijing 100084 (CN); LIU, Bin, Beijing 100084 (CN)
(74) Representative: Gill Jennings & Every LLP
(86) International application number: PCT/CN2018/081768
(87) International publication number: WO 2018/228030

(56) References cited:
- EP-A1- 2 608 075
- CN-A- 101 901 248
- CN-A- 106 469 225
- US-A1- 2008 147 714
- US-A1- 2008 147 714
- US-A1- 2008 256 094
- US-A1- 2010 332 765

## Description

### TECHNICAL FIELD

Embodiments of the present invention relate to the field of storage technologies, and in particular, to a data processing method for a Bloom filter, and a Bloom filter.

### BACKGROUND

A Bloom filter can encode and compress a large data set to extremely small storage space, and is a space-efficient random data structure. Only one question can be answered in query of the Bloom filter: whether a queried element belongs to a set. Therefore, usually, when computer software is designed, whether an element is in a set may be determined by using a Bloom filter. However, in an actual process, a hash conflict usually occurs between an element not belonging to a set and an element belonging to the set. Therefore, a query result of a Bloom filter has a false positive. A false positive indicates that an element not belonging to an encoding set is determined as belonging to the set. In an actual application, a false positive probability is usually set to a relatively small value, for example, 10⁻⁶, to not significantly affect program performance. The Bloom filter was proposed by Burton H. Bloom in 1970 and is referred to as a standard Bloom filter (SBF).

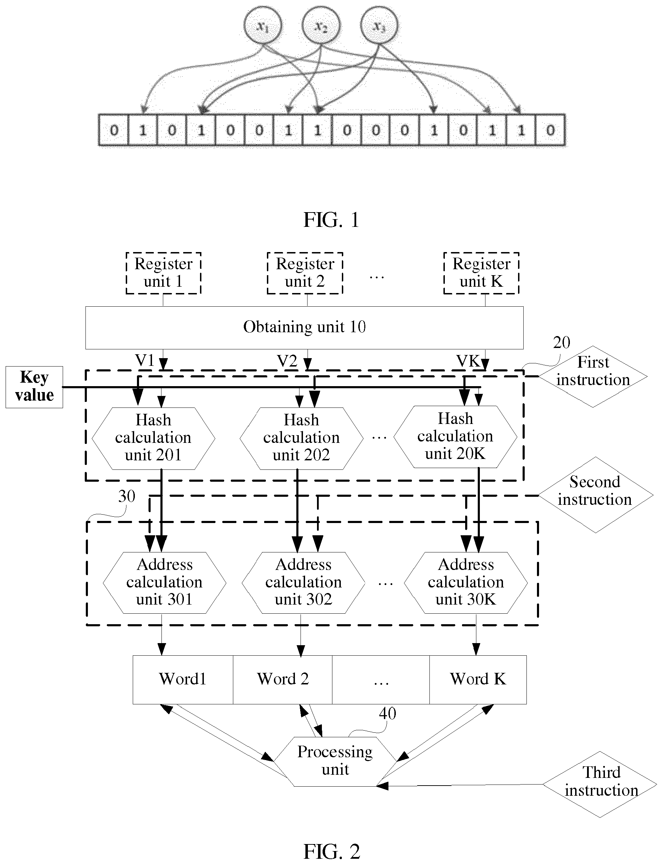

The SBF encodes and stores a set S in a bit vector having m bits. All bits of the bit vector are initialized to 0. It is assumed that the SBF encodes n elements in the set S = {xl, x2, ..., xn} in the SBF. Each element uses k independent random hash functions h1, h2, ..., and hk. Therefore, the SBF needs to select k bits from the bit vector, and the bits selected from the m bits are usually set to 1. A range of hash values generated in each hash function is [0, m-1]. When an encoding process is performed once for all elements, an insertion process of the Bloom filter is completed. The bits in the bit vector are shared by all hash functions and all elements. Therefore, a bit in the SBF may be set to 1 for a plurality of times, but only the first time has an impact. FIG. 1 shows an example of an SBF data structure.

After the insertion process ends, the SBF may perform a query function of the SBF. For a given element e, the SBF needs to determine whether the element belongs to the set S. If all bits in hi (e) are 1, it may be determined that the element e ∈ S, where 1 ≤ i ≤ k. If at least one bit in hi (e) is 0, it may be determined that e ∉ S, where 1 ≤ i ≤ k. A false positive result occurs in the following case: case: e ∉ S, but all the bits in hi (e) are exactly set to 1, where 1 ≤ i ≤ k.

However, when the Bloom filter performs an element insertion process, k bits selected by the SBF from the bit vector may be in one word, and the SBF maps the k bits in the word by using k hash functions, to complete element insertion. In this way, access conflict may occur. In addition, k elements are sequentially encoded or read, and consequently a cache miss is generated in each fetch. A relatively high cache miss rate excessively degrades program performance.

US2008/0147714 describes a Bloom filter using multiple singleported memory slices. A control value is combined with a hashed address value such that the resultant address value has the property that one, and only one, of the k memories or slices is selected for a given input value, a, for each bank.

### SUMMARY

Embodiments of the present invention provide a data processing method for a Bloom filter according to claim 1, and a Bloom filter apparatus according to claim 9, to improve search and storage efficiency of a Bloom filter.

To achieve the foregoing objective, the following technical solutions are used in the embodiments of the present invention:

According to a first example, a data processing method for a Bloom filter is provided. The method includes: obtaining a key value; performing a hash operation on the key value by using K different hash functions, to obtain K hash values; obtaining K addresses through calculation based on the K hash values, where each of the K addresses has a one-to-one association with one of K words included in a target data block, different addresses are associated with different words, and one of the addresses is used to indicate a bit in a word associated with the address; and based on the K addresses, setting a parameter corresponding to a bit that is indicated by each of the K addresses and that is in a word associated with the address, or reading a parameter corresponding to a bit that is indicated by each of the K addresses and that is in a word associated with the address, and determining, based on the read parameter, whether the key value belongs to the Bloom filter.

The examples provide the data processing method for a Bloom filter. An operation is performed on the same key value by using the K hash functions, to help obtain the K hash values, the K addresses are obtained by calculation based on the K hash values, and the key value is encoded, by using the K addresses, into words having a one-to-one association with the addresses in a data block, or the parameter corresponding to the bit indicated in the word associated with each address is read. Because the Bloom filter maps a key value into a target data block in an encoding process, the target data block includes K independent words having consecutive addresses, and different addresses are associated with different words. In this way, both setting the parameter corresponding to the bit that is indicated by each address and that is in the word associated with the address and reading the parameter corresponding to the bit that is indicated by each address and that is in the word associated with the address have no impact, thereby effectively improving cache efficiency in an element query and storage process.

Optionally, the method includes: performing a hash operation on the key value by using a first hash function, to calculate a first hash value, where the first hash function is different from the K hash functions; and obtaining a first address through calculation based on the first hash value; and before the based on the K addresses, setting a parameter corresponding to a bit that is indicated by each of the K addresses and that is in a word associated with the address, or reading a parameter corresponding to a bit that is indicated by each of the K addresses and that is in a word associated with the address, and determining, based on the read parameter, whether the key value belongs to the Bloom filter, the method provided in the embodiments of the present invention further includes: determining, based on the first address and from a plurality of data blocks included in the Bloom filter, the target data block associated with the first address. The target data block associated with the first address may be determined to help determine a data block into which the key value is encoded.

Optionally, in a second possible implementation of the first aspect, the based on the K addresses, setting a parameter corresponding to a bit that is indicated by each of the K addresses and that is in a word associated with the address includes: performing the following step on a bit included in each of the K words included in the target data block, to set a parameter corresponding to the bit included in the word: setting a parameter corresponding to a bit that is indicated by one of the K addresses and that is in a word associated with the address to a first parameter. A parameter corresponding to a bit into which the key value is encoded is set to the first parameter, so that when whether the key value belongs to the Bloom filter is queried, a query speed may be increased.

Optionally, the based on the K addresses, reading a parameter corresponding to a bit that is indicated by each of the K addresses and that is in a word associated with the address, and determine whether the key value belongs to the Bloom filter includes: based on the K addresses, reading, from the K words included in the target data block, the parameter corresponding to the bit that is indicated by each of the K addresses and that is in the word associated with the address; and when determining that parameters corresponding to bits that are indicated by the K addresses and that are in words associated with the K addresses are all the first parameters, determining that the key value belongs to the Bloom filter. Because a key value is encoded into each word of a data block, whether the key value belongs to the Bloom filter can be quickly determined by using the parameter corresponding to the bit that is indicated by each address and that is in the word associated with the address.

Optionally, the method provided in the embodiments of the present invention further includes: when determining that a parameter corresponding to at least one of the bits that are indicated by the K addresses and that are in the words associated with the K addresses is a second parameter, determining that the key value does not belong to the Bloom filter, where the second parameter is different from the first parameter. When a parameter corresponding to a bit included in a word of a data block is the second parameter, it may be determined that the key value does not belong to the Bloom filter, that is, the key value is not encoded into the Bloom filter.

Optionally, the Bloom filter includes at least one data block, each of the at least one data block is used to store information of an element, each data block includes K words, each of the K words includes w bits, and w is an integer greater than or equal to 1. Information of an element is mapped to a data block, to effectively improve cache efficiency in an element query process.

Optionally, the performing a hash operation on the key value separately by using K different hash functions, to obtain K hash values includes: performing parallel hash function calculation on the key value separately by using K hash calculation units, to obtain the K hash values, where one hash calculation unit is configured to obtain one hash value based on the key value. The K addresses are concurrently calculated, so that a speed of subsequently querying, by using the Bloom filter, whether an element belongs to the Bloom filter can be further increased.

Optionally, the obtaining K addresses through calculation based on the K hash values includes: performing parallel calculation based on the K hash values by using K address calculation units, to obtain the K addresses through calculation. The K addresses are concurrently calculated, so that a speed of subsequently querying, by using the Bloom filter, whether an element belongs to the Bloom filter can be further increased.

Optionally, the based on the K addresses, setting a parameter corresponding to a bit that is indicated by each of the K addresses and that is in a word associated with the address includes: based on the K addresses, concurrently setting the parameters corresponding to the bits that are indicated by all the K addresses and that are in the words associated with the addresses; or the reading a parameter corresponding to a bit that is indicated by each of the K addresses and that is in a word associated with the address, and determine whether the key value belongs to the Bloom filter includes: based on the K addresses, concurrently reading the parameters corresponding to the bits that are indicated by the K addresses and that are in the words associated with the addresses; and when determining that parameters corresponding to bits that are indicated by the K addresses and that are in words associated with the K addresses are all the first parameters, determining that the key value belongs to the Bloom filter. The parameters corresponding to the bits that are indicated by all the K addresses and that are in the words associated with the addresses are concurrently set, or the parameters corresponding to the bits that are indicated by all the K addresses and that are in the words associated with the addresses are concurrently read, so that an element encoding speed of the Bloom filter and cache efficiency in an element attribute query process can be increased.

According to a second example there is provided a Bloom filter, including: an obtaining unit, configured to obtain a key value and an initial value set, where the initial value set includes K initial values; a first calculation unit, configured to perform a hash operation on the key value separately by using K different hash functions, to obtain K hash values; a second calculation unit, configured to obtain K addresses through calculation based on the K hash values, where each of the K addresses has a one-to-one association with one of K words included in a target data block, different addresses are associated with different words, and one of the addresses is used to indicate a bit in a word associated with the address; and a processing unit, configured to: based on the K addresses, set a parameter corresponding to a bit that is indicated by each of the K addresses and that is in a word associated with the address, or read a parameter corresponding to a bit that is indicated by each of the K addresses and that is in a word associated with the address, and determine whether the key value belongs to the Bloom filter.

Optionally, the first calculation unit is further configured to perform a hash operation on the key value by using a first hash function, to obtain a first hash value, where the first hash function is different from the K hash functions; the second calculation unit is further configured to obtain a first address through calculation based on the first hash value; and the apparatus provided in the embodiments of the present invention further includes: a determining unit, configured to determine, based on the first address and from a plurality of data blocks included in the Bloom filter, the target data block associated with the first address.

Optionally, an operation type of a third instruction is an insertion operation, the processing unit is specifically configured to perform the following step on a bit included in each of the K words included in the target data block, to set a parameter corresponding to the bit included in the word: setting a parameter corresponding to a bit that is indicated by one of the K addresses and that is in a word associated with the address to a first parameter.

Optionally, the obtaining unit is further configured to: based on the K addresses, read, from the K words included in the target data block, the parameter corresponding to the bit that is indicated by each of the K addresses and that is in the word associated with the address; and the determining unit is specifically configured to: when determining that parameters corresponding to bits that are indicated by the K addresses and that are in words associated with the K addresses are all the first parameters, determine that the key value belongs to the Bloom filter.

Optionally, the determining unit is further specifically configured to: when determining that a parameter corresponding to at least one of the bits that are indicated by the K addresses and that are in the words associated with the K addresses is a second parameter, determine that the key value does not belong to the Bloom filter, where the second parameter is different from the first parameter.

Optionally, the Bloom filter includes at least one data block, each of the at least one data block is used to store information of an element, each data block includes K words, each of the K words includes w bits, and w is an integer greater than or equal to 1.

Optionally, the first calculation unit includes K hash calculation units, and the first calculation unit is specifically configured to perform parallel hash function calculation on the key value separately by using the K hash calculation units, to obtain the K hash values, where one hash calculation unit is configured to obtain one hash value based on the key value.

Optionally, a second instruction includes K second sub-instructions sequentially entered, and the calculation unit is specifically configured to: when triggered by each second sub-instruction, perform the following step to obtain the K addresses: triggered by one of the K second sub-instructions sequentially entered, obtaining an address through calculation based on one of the K hash values.

Optionally, the second calculation unit includes K address calculation units, and the second calculation unit is specifically configured to perform parallel calculation based on the K hash values by using the K address calculation units, to obtain the K addresses through calculation.

Optionally, the processing unit is specifically configured to: based on the K addresses, concurrently set the parameters corresponding to the bits that are indicated by all the K addresses and that are in the words associated with the addresses; or the obtaining unit is further configured to: based on the K addresses, concurrently read the parameters corresponding to the bits that are indicated by the K addresses and that are in the words associated with the addresses; and the determining unit is further configured to: when determining that parameters corresponding to bits that are indicated by the K addresses and that are in words associated with the K addresses are all the first parameters, determine that the key value belongs to the Bloom filter.

According to a third example there is provided a route search system, where the route search system includes a routing table, the routing table includes one or more prefix groups, and the prefix groups are stored by using the Bloom filter according to any one of the above examples.

A fourth example provides per-flow measurement system, where in the per-flow measurement system, an SRAM module performs storage by using the Bloom filter according to any one of the above examples.

A fifth example provides a deep packet inspection DPI system. The DPI system includes one or more security feature groups, the security feature group includes one or more security features, and the one or more security features included in the security feature group are stored by using the Bloom filter according to any one of the above examples.

A sixth example provides a Bloom filter, including: a memory, a processor, a bus, and a communications interface. The memory stores code and data. The processor is connected to the memory by using the bus. The communications interface is configured to obtain a key value. The processor is configured to: perform a hash operation on the key value based on the key value obtained by the communications interface and separately by using K different hash functions, to obtain K hash values through calculation; obtain K addresses through calculation based on the K hash values, where each of the K addresses has a one-to-one association with one of K words included in a target data block, different addresses are associated with different words, and one of the addresses is used to indicate a bit in a word associated with the address; and based on the K addresses, set a parameter corresponding to a bit that is indicated by each of the K addresses and that is in a word associated with the address, or read a parameter corresponding to a bit that is indicated by each of the K addresses and that is in a word associated with the address, and determine, based on the read parameter, whether the key value belongs to the Bloom filter.

Optionally, the processor is further configured to: perform a hash operation on the key value by using a first hash function, to obtain a first hash value through calculation, where the first hash function is different from the K hash functions; obtain a first address through calculation based on the first hash value; and determine, based on the first address and from a plurality of data blocks included in the Bloom filter, the target data block associated with the first address.

Optionally, the processor is specifically configured to perform the following step on a bit included in each of the K words included in the target data block, to set a parameter corresponding to the bit included in the word: setting a parameter corresponding to a bit that is indicated by one of the K addresses and that is in a word associated with the address to a first parameter.

Optionally, the processor is further configured to: based on the K addresses, read, from the K words included in the target data block, the parameter corresponding to the bit that is indicated by each of the K addresses and that is in the word associated with the address; and the processor is further configured to: when determining that parameters corresponding to bits that are indicated by the K addresses and that are in words associated with the K addresses are all the first parameters, determine that the key value belongs to the Bloom filter.

Optionally, the processor is further configured to: when determining that a parameter corresponding to at least one of the bits that are indicated by the K addresses and that are in the words associated with the K addresses is a second parameter, determine that the key value does not belong to the Bloom filter, where the second parameter is different from the first parameter.

Optionally, the Bloom filter includes at least one data block, each of the at least one data block is used to store information of an element, each data block includes K words, each of the K words includes w bits, and w is an integer greater than or equal to 1.

Optionally, Parallel calculation is performed based on the key value by using K hash calculation units, to obtain the K hash values, where one hash calculation unit is configured to obtain one hash value based on the key value.

Optionally, the processor is specifically configured to perform parallel calculation based on the K hash values by using K address calculation units, to obtain the K addresses through calculation.

Optionally, the processor is specifically configured to: based on the K addresses, concurrently set the parameters corresponding to the bits that are indicated by all the K addresses and that are in the words associated with the addresses; or the processor is specifically configured to: based on the K addresses, concurrently read the parameters corresponding to the bits that are indicated by the K addresses and that are in the words associated with the addresses; and when determining that parameters corresponding to bits that are indicated by the K addresses and that are in words associated with the K addresses are all the first parameters, determine that the key value belongs to the Bloom filter.

A seventh example provides a computer-readable storage medium, including an instruction. When the instruction is run on a Bloom filter, the Bloom filter is caused to perform the data processing method for a Bloom filter according to any one of the above examples.

An eighth example provides a computer program product. The computer program product includes a computer-executable instruction, and the computer-executable instruction is stored in a computer-readable storage medium. At least one processor of a Bloom filter may read the computer-executable instruction from the computer-readable storage medium. The at least one processor executes the computer-executable instruction to cause a vehicle to perform the data processing method for a Bloom filter according to any one of the above examples.

It may be understood that the Bloom filter, the computer storage medium, or the computer program product provided above is configured to perform the data processing method for a Bloom filter provided above. Therefore, for beneficial effects that can be achieved therein, refer to beneficial effects of the data processing method for a Bloom filter provided above, and the details are not described herein again.

### BRIEF DESCRIPTION OF DRAWINGS

FIG. 1 is a schematic diagram of a Bloom filter in the prior art;
FIG. 2 is a simplified schematic diagram of a system architecture according to an embodiment of the present invention;
FIG. 3 is a simplified schematic diagram of another system architecture according to an embodiment of the present invention;
FIG. 4 is a schematic diagram of a word of a Bloom filter according to an embodiment of the present invention;
FIG. 5 is a schematic flowchart of a data processing method for a Bloom filter according to an embodiment of the present invention;
FIG. 6 is a schematic flowchart of another data processing method for a Bloom filter according to an embodiment of the present invention;
FIG. 7 is a schematic diagram of a word of another Bloom filter according to an embodiment of the present invention;
FIG. 8 is a schematic composition diagram of a Bloom filter according to an embodiment of the present invention;
FIG. 9 is a schematic composition diagram of another Bloom filter according to an embodiment of the present invention;
FIG. 10 is a schematic diagram of a route search system according to an embodiment of the present invention;
FIG. 11 is a schematic diagram of a per-flow measurement system according to an embodiment of the present invention; and
FIG. 12 is a schematic diagram of a deep packet inspection system according to an embodiment of the present invention.

### DESCRIPTION OF EMBODIMENTS

In a traditional technical solution, when a Bloom filter performs an element insertion process, k bits selected by an SBF from a bit vector may be in one word, and the SBF maps the k bits in the word by using k hash functions, to complete element insertion. In this way, access conflict may occur. In addition, k elements are sequentially encoded or read, and consequently a cache miss is generated in each fetch. A relatively high cache miss rate excessively degrades program performance. To resolve this problem, the embodiments of the present invention provide a method. An operation is performed on a same key value by using the K hash functions, to help obtain K hash values, K addresses are obtained through calculation based on the K hash values, and the key value is encoded, by using the K addresses, into words having a one-to-one association with addresses in a data block, or a parameter corresponding to a bit indicated in a word associated with each address is read. Because the Bloom filter maps a key value into a target data block in an encoding process, the target data block includes K independent words having consecutive addresses. In this way, both setting the parameter corresponding to the bit that is indicated by each address and that is in the word associated with the address and reading the parameter corresponding to the bit that is indicated by each address and that is in the word associated with the address have no impact, thereby effectively improving cache efficiency in an element query and storage process.

The following describes implementations of the embodiments of the present invention in detail with reference to the accompanying drawings.

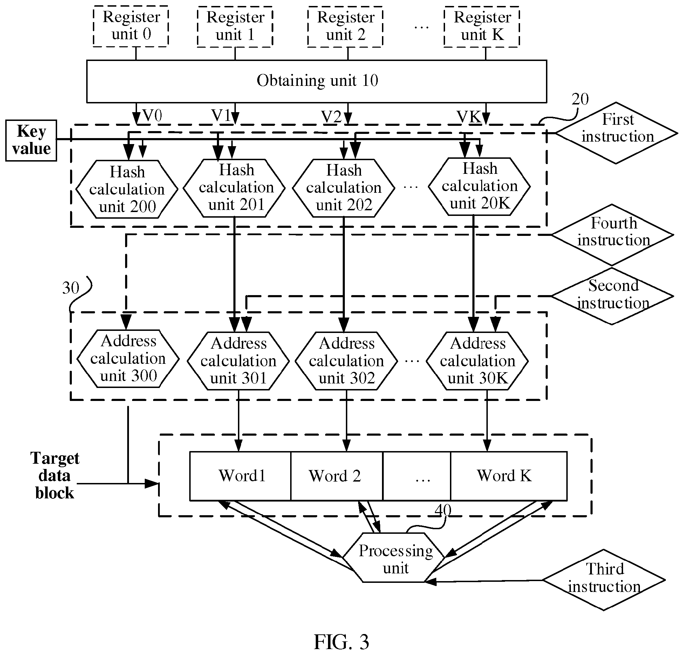

FIG. 2 and FIG. 3 are each a simplified schematic diagram of a system architecture applicable to an embodiment of this application.

As shown in FIG. 2, in a first application scenario of this embodiment of this application, the system architecture may include: an obtaining unit 10, a first calculation unit 20 connected to the obtaining unit 10, a second calculation unit 30 connected to the first calculation unit 20, and a processing unit 40 connected to the second calculation unit 30.

The obtaining unit 10 is configured to input K different initial values, for example, VI, V2, ..., and VK shown in FIG. 2, to the first calculation unit 20.

Optionally, as shown in FIG. 2, this embodiment of the present invention further includes a register unit group, for example, a register unit 1, a register unit 2, ..., and a register unit K shown in FIG. 2. Each register unit is configured to store an initial value input to the first calculation unit 20. It may be understood that a key value Key may also be stored in the register unit in this application.

Specifically, the obtaining unit 10 may obtain K different initial values from K registers, and obtain a key value from a register storing the key value.

The first calculation unit 20 includes K hash calculation units, for example, a hash calculation unit 201, a hash calculation unit 202, ..., and a hash calculation unit 20K shown in FIG. 2. A hash calculation unit is configured to perform, by using a hash function, a hash operation on a key value and an initial value input to the hash calculation unit, to obtain a hash value through calculation.

Specifically, in an actual process, triggered by a first instruction, the K hash calculation units provided in this application perform, by using hash functions in the K hash calculation units, parallel calculation on the key value and initial values received by the K hash calculation units, to obtain K hash values.

The second calculation unit 30 includes K address calculation units, for example, an address calculation unit 301, an address calculation unit 302, ..., and an address calculation unit 30K shown in FIG. 2. An address calculation unit is configured to obtain an address through calculation based on a hash value input to the address calculation unit. The address is associated with one of K words included by a data block, and is used to indicate a bit in the word associated with the address.

The processing unit 40 is configured to: based on the K addresses input by the address calculation unit 30, set a parameter corresponding to a bit that is indicated by each of the K addresses and that is in a word associated with the address, or read the parameter corresponding to the bit indicated in the word associated with each address, and determine, based on the read parameter corresponding to the bit indicated in the word associated with each address, whether the key value belongs to a Bloom filter.

Because in the actual process, the Bloom filter may include one or more data blocks, FIG. 3 shows a second application scenario of this embodiment of this application. A difference between FIG. 3 and FIG. 2 is that FIG. 2 is applicable to a case in which a Bloom filter includes only one data block or a plurality of data blocks, and a target data block is already determined before it is queried, by using the Bloom filter, whether an element is in the Bloom filter, but an architecture in FIG. 3 is applicable to a case in which a Bloom filter includes a plurality of data blocks, and a target data block is not already determined before it is queried whether an element is in the Bloom filter. Therefore, as shown in FIG. 3, a first computing unit 20 further includes a hash calculation unit 200, and a second computing unit 30 further includes an address calculation unit 300. The hash calculation unit 200 is configured to perform a hash operation on a key value and an initial value by using a hash function to obtain a first hash value, where the first hash value is used to determine an address of the target data block. The address calculation unit 300 is configured to determine the address of the target data block based on the first hash value.

It may be understood that the apparatus shown in FIG. 2 further includes one or more instruction register units. The one or more instruction register units are configured to store various instructions required in an element insertion or query process of the Bloom filter, for example, a first instruction, a second instruction, and a third instruction shown in FIG. 2.

In the architecture shown in FIG. 3, the hash calculation unit 200is configured to: perform a hash operation on a key value and an initial value V0 input by a register unit 0, to obtain the first hash value, and input the first hash value to the address calculation unit 300. The address calculation unit 300 is configured to: triggered by a fourth instruction, obtain the address of the target data block through calculation based on the first hash value. In this way, after receiving the address of the target data block, triggered by a third instruction, the processing unit 40 selects, based on the address of the target data block and from the one or more data blocks included in the Bloom filter, the target data block associated with the address of the target data block, and sets or reads, based on the K addresses, a parameter corresponding to a bit indicated in a word that is associated with each address and that is in the target data block.

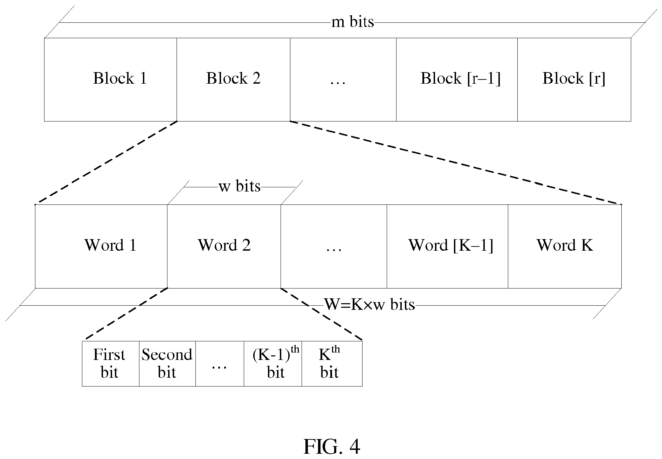

FIG. 4 shows a structure of a data block included in a Bloom filter according to an embodiment of the present invention. As shown in FIG. 4, the Bloom filter provided in this embodiment of the present invention includes r data blocks having consecutive addresses, one data block includes b bits, one data block includes K independent words having consecutive addresses, and each word includes w bits (bit). Therefore, b = k × w. The Bloom filter usually has m bits. Therefore, m = r × b =r × k × w.

It should be noted that a word is a machine word in this embodiment of the present invention, and indicates a length of a register that can be operated by using a conventional instruction. A word indicates a group of bits that may be loaded to a general-purpose register. For example, a general-purpose register of a modern central processing unit (CPU) usually uses 32 bits or 64 bits, that is, one word includes w = 32 bits or 64 bits. It should be noted that in this embodiment of the present invention, during system initialization, a parameter corresponding to each of K bits included in each word is set to a second parameter by default. The second parameter may be a letter, a character, or a digit, and this is not limited in this application. For example, the second parameter may be "0" in this application.

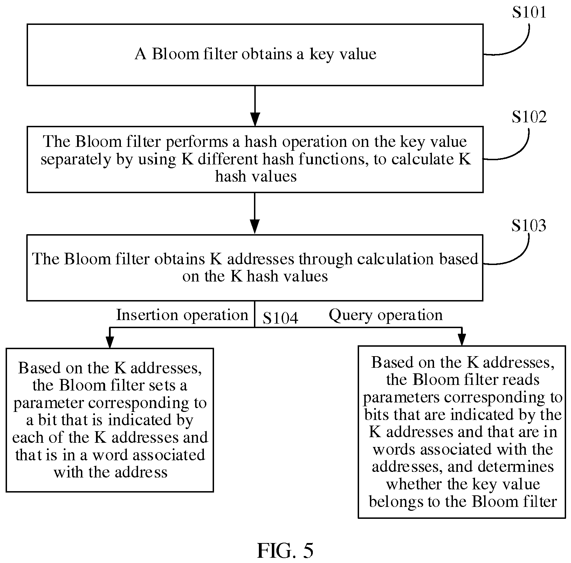

FIG. 5 is a schematic flowchart of a data processing method for a Bloom filter according to an embodiment of the present invention. As shown in FIG. 5, the method includes the following steps.

S101: A Bloom filter obtains a key value.

S102: The Bloom filter performs a hash operation on the key value separately by using K different hash functions, to obtain K hash values through calculation.

For example, a function is (Key+100)%M. Key is the key value, 100 is a random number of a hash function, that is, an initial value corresponding to the hash function, and M is a positive integer and is a limit value.

Optionally, a range of each of the K hash values is [0, K-1] in this embodiment of the present invention. A hash value of 0 is used to indicate the first bit. A hash value of K-1 is used to indicate a K^{th} bit.

In this embodiment of the present invention, an encrypted hash function or an unencrypted hash function may be used as the hash function.

S103: The Bloom filter obtains K addresses through calculation based on the K hash values, where each of the K addresses has a one-to-one association with one of K words included in a target data block, different addresses are associated with different words, and one of the addresses is used to indicate a bit in a word associated with the address.

S104: Based on the K addresses, the Bloom filter sets a parameter corresponding to a bit that is indicated by each of the K addresses and that is in a word associated with the address, or reads a parameter corresponding to a bit that is indicated by each of the K addresses and that is in a word associated with the address, and determine, based on the read parameter, whether the key value belongs to the Bloom filter.

The embodiments of the present invention provide the data processing method for a Bloom filter. An operation is performed on the same key value by using the K hash functions, to help obtain the K hash values, the K addresses are obtained through calculation based on the K hash values, and the key value is encoded, by using the K addresses, into words having a one-to-one association with the addresses in a data block, or the parameter corresponding to the bit indicated in the word associated with each address is read. Because the Bloom filter maps a key value into a target data block in an encoding process, the target data block includes K independent words having consecutive addresses, and different addresses are associated with different words. In this way, both setting the parameter corresponding to the bit that is indicated by each address and that is in the word associated with the address and reading the parameter corresponding to the bit that is indicated by each address and that is in the word associated with the address have no impact, thereby effectively improving cache efficiency in an element query and storage process.

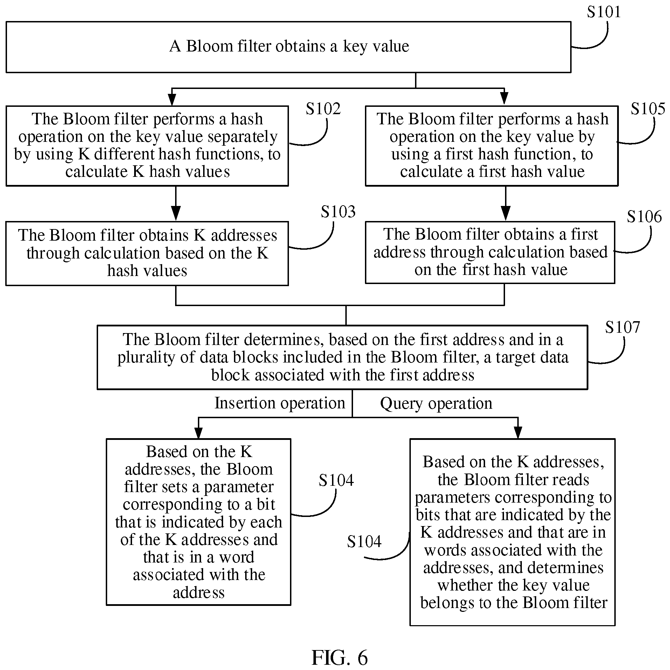

Because the Bloom filter usually includes two or more data blocks in an actual use process, before S104 is performed, an address of the target data block further needs to be determined. In this way, the Bloom filter can obtain, based on the address of the target data block, the target data block from the two or more data blocks included in the Bloom filter. Therefore, as shown in FIG. 6, the method provided in an embodiment of the present invention further includes:

S105: The Bloom filter performs a hash operation on the key value by using a first hash function, to obtain a first hash value through calculation, where the first hash function is different from the K hash functions.

S106: The Bloom filter obtains a first address through calculation based on the first hash value.

S 107: The Bloom filter determines, based on the first address and from a plurality of data blocks included in the Bloom filter, the target data block associated with the first address.

For example, when the Bloom filter includes two or more data blocks, the Bloom filter may first perform a hash operation on the key value separately by using the first hash function and the K different functions, to obtain the first hash value and the K hash values through calculation, then obtain the first address through calculation based on the first hash value, and obtain the K addresses through calculation based on the K hash values. In this way, in a subsequent query or insertion process, the target data block is first determined based on the first address, and a word that is in the target data block determined based on the first address and that is associated with each address, and a bit that is indicated by each address and that is in a word associated with the address are then determined based on the K hash values.

Optionally, in the scenario shown in FIG. 2 or FIG. 3, if an operation type of the third instruction received by the Bloom filter is an insertion operation, the Bloom filter in this embodiment of the present invention writes a parameter to a bit of a word included in the target data block by performing step S104. Specifically, the following step is performed on the bit included in each of the K words included in the target data block, to set the parameter corresponding to the bit included in each word:

S1041: The Bloom filter sets a parameter corresponding to a bit that is indicated by one of the K addresses and that is in a word associated with the address to a first parameter.

It should be noted that in this embodiment of the present invention, a manner of setting the parameter corresponding to the bit that is indicated by each of the addresses and that is in the word associated with the address is the same as that in step S1041, and details are not described herein again in this application.

Specifically, a value of the first parameter in this embodiment of the present invention may be a letter, a digit, or another value, and this is not limited in this application. For example, the first parameter in this application may be "1".

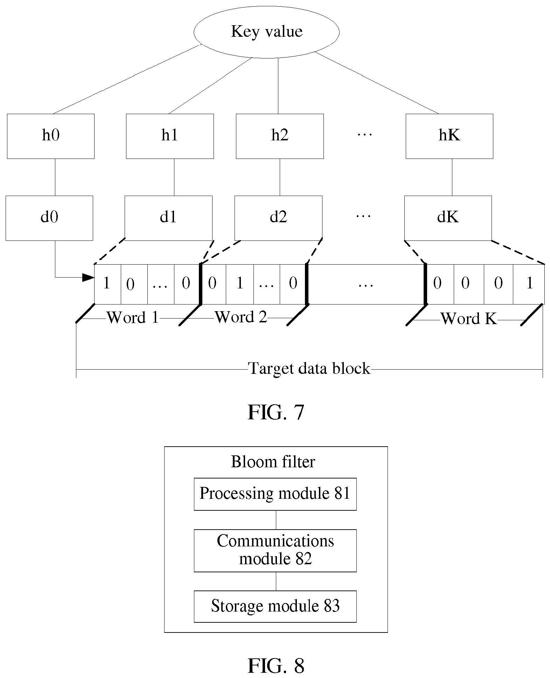

For example, as shown in FIG. 7, the Bloom filter determines the address of the target data block based on a hash value h0 obtained by using the key value and the initial value and an address d0 obtained by using the hash value h0. In this case, as shown in FIG. 7, because an address d1 points to the first bit in a word 1 in the target data block associated with the address d0, the first bit in the word 1 is set to the first parameter "1". Because an address d2 points to the second bit in a word 2 in the target data block associated with the address d1, the second bit in the word 2 is set to the first parameter "1". Because an address dK is associated with the K^{th} bit in a word K in the target data block, the K^{th} bit in the word K is set to the first parameter "1".

It should be noted that because a word has 32 bits or 64 bits in this embodiment of the present invention, a value of K is 32 or 64. Certainly, when a word may further include remaining bits in addition to 32 bits or 64 bits, the value of K depends on a quantity of bits included in the word.

In this embodiment of the present invention, a machine word indicates communication bandwidth for reading/writing once between an off-chip memory and a processor, and usually has 32 bits or 64 bits. To encode an element (the key value), in the conventional technology, for a one-memory access Bloom filter, a machine word is first selected by using an additional hash function, and then K bits are mapped in the machine word by using the K hash functions, to encode the element into the Bloom filter. However, in this application, to encode an element, a target data block (including K machine words) is selected by using an address. Then, a parameter corresponding to a bit that is indicated by each of the K addresses and that is in a machine word associated with the address is set to the first parameter by using the K addresses, to encode the element into the Bloom filter.

In addition, in an actual process, a value of each of the K addresses points to a bit in a word associated with the address. For example, if a value of d1 is 15, the Bloom filter needs to set a parameter of the 16^{th} bit in a word 1 associated with d1 to the first parameter. If a value of d2 is 13, the Bloom filter needs to set a parameter corresponding to the 14^{th} bit in a word 2 associated with d2 to the first parameter, and so on. This is not limited in this application.

Optionally, in an actual process, the Bloom filter is usually configured to query whether an element belongs to the Bloom filter. Therefore, in this embodiment of the present invention, when it needs to be determined whether an element belongs to the Bloom filter, step S104 may be specifically implemented in the following manner:

S1042: Based on the K addresses, the Bloom filter reads, from the K words included in the target data block, the parameter corresponding to the bit that is indicated by each of the K addresses.

S1043: When determining that parameters corresponding to bits that are indicated by the K addresses and that are in words associated with the K addresses are all the first parameters, the Bloom filter determines that the key value belongs to the Bloom filter.

For example, a word includes 32 bits in this application. The K addresses are d1, d2, ..., and d32. d1 is associated with a word 1, d2 is associated with a word 2, ..., and d32 is associated with a word 32. A value of d1 is 15, a value of d2 is 13, and a value of d32 is 25. In this case, when the Bloom filter performs an encoding process, a parameter corresponding to the 16^{th} bit in the word 1 is set to the first parameter, a parameter corresponding to the 14^{th} bit in the word 2 is set to the first parameter, and a parameter corresponding to the 26^{th} bit in the word 32 is set to the first parameter.

Therefore, finally, the Bloom filter reads the parameter corresponding to the 16^{th} bit in the word 1 is the first parameter, the parameter corresponding to the 14^{th} bit in the word 2 is the first parameter, and the parameter corresponding to the 26^{th} bit in the word 32 is the first parameter. Therefore, the Bloom filter determines that the key value belongs to the Bloom filter.

It may be understood that the first parameter corresponding to a bit in this embodiment of the present invention is used to indicate that the key value is encoded into the bit. A second parameter corresponding to a bit in this embodiment of the present invention is used to indicate that the key value is not encoded into the bit.

Optionally, step S104 may alternatively be implemented in the following manner:

S1044: When determining that a parameter corresponding to at least one of the bits that are indicated by the K addresses and that are in the words associated with the K addresses is a second parameter, the Bloom filter determines that the key value does not belong to the Bloom filter, where the second parameter is different from the first parameter.

It may be understood that in an actual process, the key value may not be encoded into the Bloom filter. Therefore, it only needs to determine that the parameter corresponding to the bit in at least one of the K words is the second parameter, to determine that the key value does not belong to the Bloom filter.

Optionally, the Bloom filter in this application includes at least one data block, each of the at least one data block is used to store information of an element, each data block includes K words, each of the K words includes w bits, and w is an integer greater than or equal to 1.

Optionally, to improve parallelism of hash calculation and element bit detection, in this application, step S102 may be specifically implemented in the following manner: Parallel calculation is performed based on the key value by using K hash calculation units, to obtain the K hash values, where one hash calculation unit is configured to obtain one hash value based on the key value.

Specifically, as shown in FIG. 2 or FIG. 3, triggered by the first instruction, the K hash calculation units (for example, the hash calculation unit 201, the hash calculation unit 202, ..., and the hash calculation unit 20K) simultaneously perform parallel calculation based on the received same key value and initial values received by the K hash calculation units, to obtain the K hash values. It may be understood that in the structure shown in FIG. 3, the hash calculation unit 200 is further configured to perform parallel calculation with other hash calculation units (for example, the hash calculation unit 201, the hash calculation unit 202, ..., and the hash calculation unit 20K) based on the received key value and a received initial value V0. In this way, K+1 hash values may be obtained. The first hash value obtained by the hash calculation unit 200 is used to determine the address of the target data block, that is, the first address.

Optionally, in this embodiment of the present invention, step S103 may be specifically implemented in the following manner: the Bloom filter performs parallel calculation based on the K hash values by using the K address calculation units, to obtain the K addresses through calculation.

Specifically, in the structures shown in FIG. 2 and FIG. 3, the K addresses calculation units (including the address calculation unit 301, the address calculation unit 302, ..., and the address calculation unit 30K are configured to: triggered by the second instruction, perform parallel calculation based on hash values received by the K addresses calculation units (or hash values output by hash calculation units connected to the K addresses calculation units), to obtain the K addresses. In addition, in the structure shown in FIG. 3, the address calculation unit 300 is further configured to: triggered by the fourth instruction, obtain the address of the target data block through calculation based on a hash value output by the hash calculation unit 200.

Optionally, in this embodiment of the present invention, step S104 may be specifically implemented in the following manner: based on the K addresses, concurrently setting, by the Bloom filter, the parameters corresponding to the bits that are indicated by all the K addresses and that are in the words associated with the addresses.

Specifically, the Bloom filter may determine, based on the K addresses, the bit that is indicated by each address and that is in the word associated with the address, and after determining the bit that is indicated by each address and that is in the word associated with the address, concurrently set the parameters of the bits that are indicated by all the addresses and that are in the words associated with the addresses.

Alternatively, based on the K addresses, the Bloom filter concurrently reads the parameters corresponding to the bits that are indicated by the K addresses and that are in the words associated with the addresses; and when determining that the parameters corresponding to the bits that are indicated by the K addresses and that are in the words associated with the K addresses are all the first parameters, the Bloom filter determines that the key value belongs to the Bloom filter.

Specifically, the Bloom filter may determine, based on the K addresses, the bit that is indicated by each address and that is in the word associated with the address, and after determining the bit that is indicated by each address and that is in the word associated with the address, concurrently read the parameters of the bits that are indicated by all the addresses and that are in the words associated with the addresses.

It may be understood that the Bloom filter in this embodiment of the present invention is based on a single-instruction multiple-data stream (SIMD) technology. Therefore, the Bloom filter provided in this application is briefly referred to as an ultra-fast Bloom filter (UFBF).

Single-instruction multiple-data stream means that a plurality of processing units concurrently execute a same instruction to process different data to obtain different results.

It may be understood that the foregoing embodiments describe a case in which the Bloom filter performs parallel calculation to obtain the hash values and performs parallel calculation to obtain the K+1 addresses. In an actual case, the method provided in the embodiments of the present invention is also applicable to: triggered by an instruction 1, performing a hash operation on the key value by using the first hash function to obtain the first hash value; triggered by an instruction 2, obtaining the first address through calculation based on the first hash value; triggered by an instruction 3, determining, by using the first address, the target data block associated with the first address; triggered by an instruction 4, performing a hash operation on the key value by using a second hash function to obtain a second hash value; triggered by an instruction 5, obtaining an address through calculation based on the second hash value; triggered by an instruction 6, based on the address, setting a parameter corresponding to a bit that is indicated by the address and that is in a word word that is in the target data block and associated with the address to the first parameter; triggered by an instruction 7, performing a hash operation on the key value by using a third hash function to obtain a third hash value; triggered by an instruction 8, obtaining a third address through calculation based on the third hash value; triggered by an instruction 9, based on the third address, setting a parameter corresponding to a bit that is indicated by the third address and that is in a word word that is in the target data block and associated with the third address to the first parameter; triggered by an instruction 10, performing a hash operation on the key value by using a fourth hash function to obtain a fourth hash value; triggered by an instruction 11, obtaining a fourth address through calculation based on the fourth hash value; triggered by an instruction 12, based on the fourth address, setting a parameter corresponding to a bit that is indicated by the fourth address and that is in a word word that is in the target data block and associated with the fourth address to the first parameter, and so on, until the key value is encoded into a bit in each of all the words included in the target data block.

In a query process, in the embodiments of the present invention, triggered by an instruction 13, a hash operation is performed on the key value by using the first hash function to obtain the first hash value; triggered by an instruction 14, the first address is obtained through calculation based on the first hash value; triggered by an instruction 15, the target data block associated with the first address is determined by using the first address; triggered by an instruction 16, a hash operation is performed on the key value by using a second hash function to obtain a second hash value; triggered by an instruction 17, an address is obtained through calculation based on the second hash value; triggered by an instruction 18, a parameter corresponding to a bit that is indicated by the address and that is in a word word that is in the target data block and associated with the address is read based on the address; triggered by an instruction 18, a hash operation is performed on the key value by using a third hash function to obtain a third hash value; triggered by an instruction 19, a third address is obtained through calculation based on the third hash value; triggered by an instruction 20, a parameter corresponding to a bit that is indicated by the third address and that is in a word word that is in the target data block and associated with the third address is read based on the third address; triggered by the instruction 20, a hash operation is performed on the key value by using a fourth hash function to obtain a fourth hash value; triggered by an instruction 21, a fourth address is obtained through calculation based on the fourth hash value; triggered by an instruction 22, a parameter corresponding to a bit that is indicated by the fourth address and that is in a word word that is in the target data block and that is associated with the fourth address is read based on the fourth address, and so on, until a parameter corresponding to a bit in each of all the words included in the target data block is read. Whether the key value is in the Bloom filter is determined based on the parameter read from the bit in each word.

It may be understood that in an actual use process, the embodiments of the present invention may further include an instruction register, configured to store an instruction in a key value encoding/query process, for example, the first instruction, the second instruction, the third instruction, and the fourth instruction.

The foregoing mainly describes the solutions provided in the embodiments of the present invention from the perspective of interaction between network elements. It may be understood that to perform the foregoing functions, each network element, for example, the Bloom filter, includes a corresponding hardware structure and/or software module for performing the functions. A person skilled in the art should be easily aware that, the algorithm steps in the examples described with reference to the embodiments disclosed in the present invention may be implemented by hardware or a combination of hardware and computer software in this application. Whether a function is performed by hardware or computer software driving hardware depends on particular applications and design constraint conditions of the technical solutions. A person skilled in the art may use different methods to implement the described functions for each particular application, but it should not be considered that the implementation goes beyond the scope of the present invention.

In the embodiments of the present invention, the functional modules of the Bloom filter may be divided based on the foregoing method embodiments. For example, functional modules may be divided in correspondence with functions, or two or more functions may be integrated in one processing module. The integrated module may be implemented in a form of hardware, or may be implemented in a form of a functional module of software. It should be noted that the module division in the embodiments of the present invention is an example, and is merely logical function division. There may be another division manner in an actual implementation.

When functional modules are divided in correspondence with functions, FIG. 2 or FIG. 3 is a possible schematic composition diagram of the Bloom filter in the foregoing embodiments. As shown in FIG. 2 or FIG. 3, the Bloom filter may include: the obtaining unit 10, the first calculation unit 20, the second calculation unit 30, and the processing unit 40.

The obtaining unit 10 is configured to support the Bloom filter in performing steps S101 and S1042 in the foregoing embodiments.

The first calculation unit 20 is configured to support the Bloom filter in performing steps S102 and S105 in the foregoing embodiments.

The second calculation unit 30 is configured to support the Bloom filter in performing steps S103 and S106 in the foregoing embodiments.

The processing unit 40 is configured to support the Bloom filter in performing steps S104 and S1041 in the foregoing embodiments.

In the embodiments of the present invention, further, as shown in FIG. 2, the Bloom filter may further include: a determining unit 50.

The determining unit 50 is configured to support the Bloom filter in performing steps S 107, S1043, and S1044 in the foregoing embodiments.

It should be noted that for function descriptions of a corresponding functional module, refer to all related content of the steps in the method embodiments, and details are not described herein again.

The Bloom filter provided in this embodiment of the present invention is configured to perform the foregoing data processing method, and therefore can reach the same effects as that of the foregoing data processing method.

When an integrated unit is used, FIG. 8 is another possible schematic composition diagram of the Bloom filter in the foregoing embodiment. As shown in FIG. 8, the Bloom filter includes a processing module 81 and a communications module 82.

The processing module 81 is configured to control and manage actions of the Bloom filter. For example, the processing module 81 is configured to support the Bloom filter in performing steps S102, S105, S103, S106, S104, S1041, S107, S1043, and S1044, and/or is configured to perform another process of the technology described in this specification. The communications module 82 is configured to: support the Bloom filter in communicating with another network entity, for example, communicating with a functional module (for example, a register unit) shown in FIG. 2, and specifically support the Bloom filter in performing steps S101 and S1042. The Bloom filter may further include a storage module 83, configured to store program code and data of the Bloom filter.

The processing module 81 may be a processor or a controller. It may implement or execute various examples of logical blocks, modules, and circuits that are described with reference to the contents disclosed in the present invention. The processor may alternatively be a combination of calculation functions, for example, a combination of one or more microprocessors or a combination of a DSP and a microprocessor. The communications module 82 may be a communications interface, a transceiver circuit, or the like. The storage module 83 may be a memory.

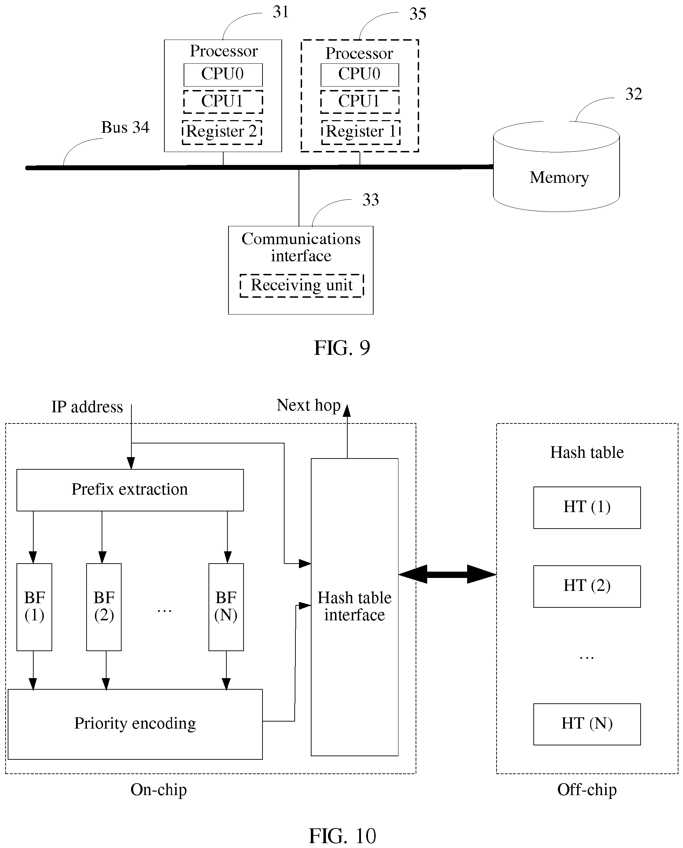

When the processing module 81 is a processor, the communications module 82 is a communications interface, and the storage module 83 is a memory, a server in this embodiment of the present invention may be a Bloom filter shown in FIG. 9. It may be understood that in the embodiments of the present invention, each hash calculation unit is integrated in a processor and each address calculation unit is integrated in a processor. In the embodiments of the present invention, the processor further includes a register, and the register is configured to store an instruction required by the processor to perform the foregoing method.

As shown in FIG. 9, the Bloom filter includes: at least one processor 31, a memory 32, a communications interface 33, and a bus 34.

The processor 31 is a control center of the Bloom filter, and may be a processor or may be a collective name of a plurality of processing elements. For example, the processor 31 is a central processing unit (CPU), or may be an application-specific integrated circuit (ASIC), or one or more integrated circuits configured to implement the embodiments of this application, for example, one or more microprocessors, or one or more field programmable gate arrays (FPGA).

The processor 31 may perform various functions of the Bloom filter by running or executing a software program stored in the memory 32 and invoking data stored in the memory 32.

In a specific implementation, in an embodiment, the processor 31 may include one or more CPUs, for example, a CPU 0 and a CPU 1 shown in FIG. 9. In the embodiments of the present invention, the processor further includes a register, and the register is configured to store an instruction required by the processor to perform the foregoing method.

In a specific implementation, in an embodiment, the Bloom filter may include a plurality of processors, for example, a processor 31 and a processor 35 shown in FIG. 9. Each of the processors may be a single-core processor (single-CPU) or may be a multi-core processor (multi-CPU). The processor herein may be one or more devices or circuits, and/or a processing core configured to process data (for example, a computer program instruction).

The memory 32 may be a read-only memory (ROM) or another type of static storage device capable of storing static information and instructions, a random access memory (RAM) or another type of dynamic storage device capable of storing information and instructions, or may be an electrically erasable programmable read-only memory (EEPROM), a compact disc read-only memory (CD-ROM), or other compact disc storage or optical disc storage (including a compressed optical disc, a laser disc, an optical disc, a digital universal optical disc, a blue-ray optical disc, and the like), a magnetic disk storage medium or another magnetic storage device, or any other medium capable of carrying or storing expected program code in a form of instructions or data structures and capable of being accessed by a computer, but is not limited thereto. The memory 32 may exist independently, and connect to the processor 31 by using the bus 34. The memory 32 may alternatively be integrated in the processor 31.

The memory 32 is configured to store a software program for executing the solutions of this application, and the processor 31 controls execution.

The communications interface 33 is configured to communicate with another device or communications network by using any apparatus such as a transceiver, for example, an Ethernet interface, a radio access network (RAN) interface, and a wireless local area network (WLAN) interface. The communications interface 33 may include a receiving unit for performing a receiving function and a sending unit for performing a sending function.

The bus 34 may be an industry standard architecture (ISA) bus, a peripheral component interconnect (PCI) bus, an extended industry standard architecture (EISA) bus, or the like. The bus may be divided into an address bus, a data bus, a control bus, and the like. For ease of indication, the bus is indicated by using only one bold line in FIG. 9. However, it does not indicate that there is only one bus or only one type of bus.

During hardware implementation, the processing unit 40, the first calculation unit 20, the second calculation unit 30, the register unit 0, the register unit 1, the register unit 2, ..., and the register unit K shown in FIG. 2 and FIG. 3 are all integrated in the processor shown in FIG. 9, and the obtaining unit 10 may be the communications interface shown in FIG. 9. Optionally, the register unit 0, the register unit 1, the register unit 2, ..., and the register unit K may be one or more registers in the processor.

The device structure shown in FIG. 9 constitutes no limitation on an external device, and may include more or fewer components than those shown in the figure, or some components may be combined, or a different component deployment may be used.

The embodiments of the present invention may be applied to the high-speed network field, for example, to route search, network measurement, and deep packet inspection by using a Bloom filter.

FIG. 10 shows a route search system according to this application. Prefixes in a routing table in the route search system are divided into N prefix groups based on lengths. A prefix group is stored by using a Bloom filter and a hash table. In this embodiment, the Bloom filter shown in FIG. 2, FIG. 3, FIG. 8, or FIG. 9 is used as the Bloom filter, and this can increase a search speed of each Bloom filter. In FIG. 10, BF (1) to BF (N) are N Bloom filters shown in FIG. 2, FIG. 3, FIG. 8, or FIG. 9 in the embodiments of the present invention, and can effectively increase an entire route search speed.

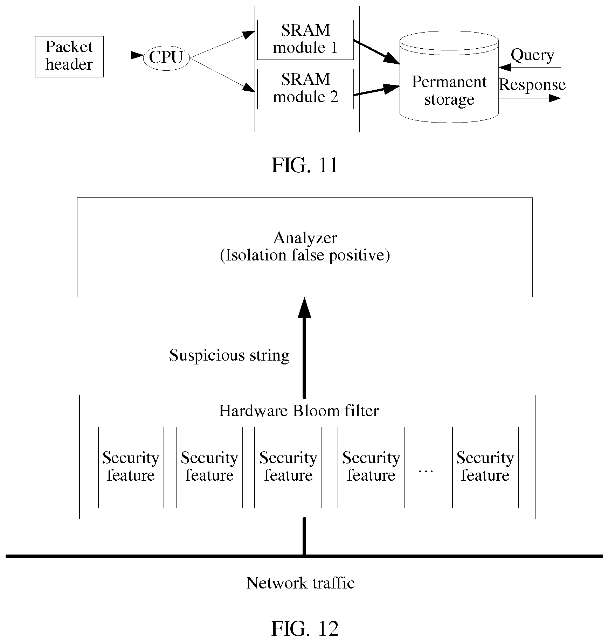

FIG. 11 shows a per-flow measurement system according to this application. In the system, a static random-access memory (SRAM) module records a status of each flow by using the Bloom filter provided in the embodiments of the present invention. Because the Bloom filter mechanism provided in the embodiments of the present invention has features of high search performance and a high compression rate, the per-flow measurement system may be stored in a high speed SRAM memory. Because the Bloom filter in the embodiments of the present invention performs parallel calculation to obtain each hash value and each address, a measurement rate of the per-flow measurement system can be greatly increased in an actual application, thereby optimizing entire measurement.

Specifically, when a new data packet arrives, a packet header of a program is input to a CPU, the CPU writes the packet header to an SCBF module, where the SCBF module includes an SRAM module 1 and an SRAM module 2, and the SRAM module 1 and the SRAM module 2 write all files to a permanent storage device at a time. In this way, query may be performed to determine whether an element belongs to an encoded-set of the Bloom filter.

FIG. 12 shows a deep packet inspection (DPI) system provided in this application. In the system, all Security Signature are divided into several groups based on lengths. A group of security features in each group are stored by using the Bloom filter mechanism provided in the embodiments of the present invention. For an arrived data packet, Bloom filters are sequentially searched, to determine whether there is a network security problem. Because a network link rate becomes higher, the Bloom filters are searched faster. Therefore, this embodiment of the present invention can significantly decelerate execution of the Bloom filters, thereby improving a throughput of the DPI system.

Optionally, the DPI system may be used in the network security field, the content-based billing field, and the content-based forwarding field.

Specifically, triggered by a same instruction, the Bloom filter in the embodiments of the present invention performs a hash operation on a same key value by using a plurality of different hash functions, to obtain K+1 hash values, triggered by an instruction, obtains an address of a target data block by using one of the K+1 hash values, and triggered by another instruction, computes K addresses by using remaining K hash values other than K+1 hash values, where the K addresses are used to indicate bits in words associated with the K addresses. In this way, in an element encoding process, a key value may be encoded into K words of a data block by performing parallel calculation, thereby not only effectively improving a concurrent execution capability of a Bloom filter, but also improving cache efficiency, so that a query speed of an ultra-fast Bloom filter is increased by approximately 2 to 3 times. In addition, regardless of whether a size of the Bloom filter is less than that of a cache or greater than that of a cache, a query speed of the Bloom filter is faster than that of a conventional Bloom filter. A query speed of the Bloom filter in the embodiments of the present invention does not increase as hash functions increase, and extensibility is desirable. In this way, although an application uses a plurality of Bloom filters, or a Bloom filter uses a relatively large quantity of hash functions, because address calculation and parameter setting/parameter reading processes are all concurrently performed, calculation overheads can be reduced and fetch delays can be reduced.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or part of the functions described above.

In another aspect, an embodiment of the present invention provides a computer storage medium, including an instruction. When the instruction is run on a Bloom filter, the Bloom filter is caused to perform S102, S105, S103, S106, S104, S1041, S107, S1043, S1044, S101, and S1042, and/or be configured to perform another process performed by the Bloom filter in the technology described in this specification. For specific details of a sequence of performing the steps, refer to the foregoing embodiments, and details are not described herein again in this application.

In still another aspect, an embodiment of the present invention provides a computer program product. The computer program product includes a computer-executable instruction. The computer-executable instruction is stored in a computer-readable storage medium. At least one processor of a Bloom filter may read the computer-executable instruction from the computer-readable storage medium. The at least one processor executes the computer-executable instruction to cause the Bloom filter to perform steps S102, S105, S103, S106, S104, S1041, S107, S1043, S1044, S101, and S1042 in the foregoing embodiments, and/or be configured to perform another process performed by the Bloom filter in the technology described in this specification. It should be noted that for a specific sequence of performing the steps, refer to descriptions in the foregoing embodiments, and details are not described herein again in this application.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of the present invention essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of the present invention. The foregoing storage medium includes: any medium that can store program code, such as a USB flash drive, a removable hard disk, ROM, RAM, a magnetic disk, or an optical disc.

The foregoing descriptions are merely specific embodiments of the present invention, but are not intended to limit the protection scope of the present invention. Any variation or replacement disclosed in the present invention shall fall within the protection scope of the present invention. Therefore, the protection scope of the present invention shall be subject to the protection scope of the claims.

## Claims

1. A computer implemented data processing method for a Bloom filter, comprising:
obtaining (S101) a key value;
performing (S102) a hash operation on the key value separately by using K different hash functions, to obtain K hash values;
obtaining (S103) K addresses through calculation based on the K hash values, wherein each of the K addresses has a one-to-one association with one of K words comprised in a target data block, different addresses are associated with different words, and one of the addresses is used to indicate a bit in a word associated with the address; and
based on the K addresses, setting (S104) a parameter corresponding to a bit that is indicated by each of the addresses and that is in a word associated with the address, or reading a parameter corresponding to a bit that is indicated by each of the addresses and that is in a word associated with the address, to determine, based on the read parameter, whether the key value belongs to the Bloom filter
**characterized in that**
the step of setting a parameter (S104) comprises:
performing the following step on a bit comprised in each of the K words comprised in the target data block, to set a parameter corresponding to the bit comprised in the word:
setting a parameter corresponding to a bit that is indicated by one of the K addresses and that is in a word associated with the address to a first parameter.

2. The method according to claim 1, wherein the method further comprises:
performing a hash operation on the key value by using a first hash function, to obtain a first hash value through calculation, wherein the first hash function is different from the K hash functions; and
obtaining a first address through calculation based on the first hash value; and
before the step of setting a parameter corresponding to a bit that is indicated by each of the addresses and that is in a word associated with the address, or reading a parameter corresponding to a bit that is indicated by each of the addresses and that is in a word associated with the address, to determine, based on the read parameter, whether the key value belongs to the Bloom filter, the method further comprises:
determining, based on the first address and from a plurality of data blocks comprised in the Bloom filter, the target data block associated with the first address.

3. The method according to any one of claims 1 to 2, wherein the based on the K addresses, reading a parameter corresponding to a bit that is indicated by each of the addresses and that is in a word associated with the address, and determining, based on the read parameter, whether the key value belongs to the Bloom filter comprises:
based on the K addresses, reading, from the K words comprised in the target data block, the parameter corresponding to the bit that is indicated by each of the K addresses and that is in the word associated with the address; and
when determining that parameters corresponding to bits that are indicated by the K addresses and that are in words associated with the K addresses are all the first parameters, determining that the key value belongs to the Bloom filter.

4. The method according to claim 3, wherein the method further comprises:
when determining that a parameter corresponding to at least one of the bits that are indicated by all the K addresses and that are in the words associated with the K addresses is a second parameter, determining that the key value does not belong to the Bloom filter, wherein the second parameter is different from the first parameter.

5. The method according to any one of claims 1 to 4, wherein the Bloom filter comprises at least one data block, each of the at least one data block comprises K independent words having consecutive addresses, each of the K words comprises w bits, and w is an integer greater than or equal to 1.

6. The method according to any one of claims 1 to 5, wherein the performing a hash operation on the key value separately by using K different hash functions, to obtain K hash values through calculation comprises:
performing parallel hash function calculation on the key value separately by using K hash calculation units, to obtain the K hash values, wherein one hash calculation unit is configured to obtain one hash value based on the key value.

7. The method according to any one of claims 1 to 6, wherein the obtaining K addresses through calculation based on the K hash values comprises:
performing parallel calculation based on the K hash values by using K address calculation units, to obtain the K addresses through calculation.

8. The method according to any one of claims 1 to 7, wherein the based on the K addresses, setting a parameter corresponding to a bit that is indicated by each of the K addresses and that is in a word associated with the address comprises:
based on the K addresses, concurrently setting the parameters corresponding to the bits that are indicated by all the K addresses and that are in the words associated with the addresses; or
the reading a parameter corresponding to a bit that is indicated by each of the addresses and that is in a word associated with the address, and determining, based on the read parameter, whether the key value belongs to the Bloom filter comprises:
based on the K addresses, concurrently reading the parameters corresponding to the bits that are indicated by all the K addresses and that are in the words associated with the addresses; and
when determining that the parameters corresponding to the bits that are indicated by all the K addresses and that are in the words associated with the K addresses are all the first parameters, determining that the key value belongs to the Bloom filter.

9. A Bloom filter apparatus, comprising:
an obtaining unit (10), configured to obtain a key value;
a first calculation unit (20), configured to perform a hash operation on the key value separately by using K different hash functions, to obtain K hash values;
a second calculation unit (30), configured to obtain K addresses through calculation based on the K hash values, wherein each of the K addresses has a one-to-one association with one of K words comprised in a target data block, different addresses are associated with different words, and one of the addresses is used to indicate a bit in a word associated with the address; and
a processing unit (40), configured to: based on the K addresses, set a parameter corresponding to a bit that is indicated by each of the K addresses and that is in a word associated with the address, or read a parameter corresponding to a bit that is indicated by each of the K addresses and that is in a word associated with the address, and determine, based on the read parameter, whether the key value belongs to the Bloom filter;
**characterized in that**
the processing unit is specifically configured to perform the following step on a bit comprised in each of the K words comprised in the target data block, to set a parameter of the bit comprised in the word:
setting a parameter corresponding to a bit that is indicated by one of the K addresses and that is in a word associated with the address to a first parameter.

10. The Bloom filter apparatus according to claim 9, wherein
the first calculation unit is further configured to perform a hash operation on the key value by using a first hash function, to obtain a first hash value through calculation, wherein the first hash function is different from the K hash functions;
the second calculation unit is further configured to obtain a first address through calculation based on the first hash value; and
the apparatus further comprises:
a determining unit, configured to determine, based on the first address and from a plurality of data blocks comprised in the Bloom filter, the target data block associated with the first address.

11. The Bloom filter apparatus according to any one of claims 9 to 10, wherein the obtaining unit is further configured to: based on the K addresses, read, from the K words comprised in the target data block, the parameter corresponding to the bit that is indicated by each of the K addresses and that is in the word associated with the address; and
the determining unit is specifically configured to: when determining that the parameters corresponding to the bits that are indicated by all the K addresses and that are in the words associated with the K addresses are all the first parameters, determine that the key value belongs to the Bloom filter.

12. The Bloom filter apparatus according to claim 11, wherein the determining unit is further specifically configured to: when determining that a parameter corresponding to at least one of the bits that are indicated by the K addresses and that are in the words associated with the K addresses is a second parameter, determine that the key value does not belong to the Bloom filter, wherein the second parameter is different from the first parameter.

13. The Bloom filter apparatus according to any one of claims 9 to 12, wherein the Bloom filter comprises at least one data block, each of the at least one data block comprises K words, each of the K words comprises w bits, and w is an integer greater than or equal to 1.

14. The Bloom filter apparatus according to any one of claims 9 to 13, wherein the first calculation unit comprises K hash calculation units, and the first calculation unit is specifically configured to perform parallel hash function calculation on the key value separately by using the K hash calculation units, to obtain the K hash values, wherein one hash calculation unit is configured to obtain one hash value based on the key value.

15. The Bloom filter apparatus according to any one of claims 9 to 14, wherein the second calculation unit comprises K address calculation units, and the second calculation unit is specifically configured to perform parallel calculation based on the K hash values by using the K address calculation units, to obtain the K addresses through calculation.

16. The Bloom filter apparatus according to any one of claims 9 to 15, wherein the processing unit is specifically configured to: based on the K addresses, concurrently set the parameters corresponding to the bits that are indicated by all the K addresses and that are in the words associated with the addresses; or
the obtaining unit is further configured to: based on the K addresses, concurrently read the parameters corresponding to the bits that are indicated by the K addresses and that are in the words associated with the addresses; and
the determining unit is further configured to: when determining that the parameters corresponding to the bits that are indicated by the K addresses and that are in the words associated with the K addresses are all the first parameters, determine that the key value belongs to the Bloom filter.

17. A route search system, wherein the route search system comprises a routing table, the routing table comprises one or more prefix groups, and the prefix groups are stored by using the Bloom filter apparatus according to any one of claims 9 to 16.

18. A per-flow measurement system, wherein in the per-flow measurement system, an SRAM module records a status of each flow by using the Bloom filter apparatus according to any one of claims 9 to 16.

19. A deep packet inspection DPI system, wherein the DPI system comprises one or more security feature groups, the security feature group comprises one or more security features, and the one or more security features comprised in the security feature group are stored by using the Bloom filter apparatus according to any one of claims 9 to 16.

20. A computer-readable storage medium, comprising an instruction, wherein when the instruction is run on a Bloom filter, the Bloom filter is caused to perform the data processing method for a Bloom filter apparatus according to any one of claims 1 to 8.

## Patentansprüche

1. Computerimplementiertes Datenverarbeitungsverfahren für ein Bloom-Filter, das Folgendes umfasst:
Erhalten (S101) eines Schlüsselwerts;
Durchführen (S102) einer Hash-Operation an dem Schlüsselwert auf separate Weise durch Verwenden von K unterschiedlichen Hash-Funktionen, um K Hash-Werte zu erhalten;
Erhalten (S103) von K Adressen durch Berechnung auf der Grundlage der K Hash-Werte, wobei jede der K Adressen eine eineindeutige Verknüpfung mit einem von K in einem Zieldatenblock enthaltenen Worten aufweist, unterschiedliche Adressen mit unterschiedlichen Worten verknüpft sind und eine der Adressen verwendet wird zum Angeben eines Bits in einem Wort, das mit der Adresse verknüpft ist; und
auf der Grundlage der K Adressen, Einstellen (S104) eines Parameters, entsprechend einem Bit, das durch jede der Adressen angegeben wird und das sich in einem mit der Adresse verknüpften Wort befindet, oder Auslesen eines Parameters,
entsprechend einem Bit, das durch jede der Adressen angegeben wird und das sich in einem mit der Adresse verknüpften Wort befindet, zum Bestimmen, auf der Grundlage des ausgelesenen Parameters, ob der Schlüsselwert zu dem Bloom-Filter gehört,
**dadurch gekennzeichnet, dass**
der Schritt des Einstellens eines Parameters (S104) Folgendes umfasst:
Durchführen des folgenden Schritts an einem Bit, das in jedem der K Worte, die in dem Zieldatenblock enthalten sind, enthalten ist, zum Einstellen eines Parameters, der dem in dem Wort enthaltenen Bit entspricht:
Einstellen eines Parameters, der einem Bit entspricht, das durch eine der K Adressen angegeben wird und das sich in einem mit der Adresse verknüpften Wort befindet, auf einen ersten Parameter.

2. Verfahren nach Anspruch 1, wobei das Verfahren ferner Folgendes umfasst:
Durchführen einer Hash-Operation an dem Schlüsselwert durch Verwenden einer ersten Hash-Funktion, um einen ersten Hash-Wert durch Berechnung zu erhalten, wobei sich die erste Hash-Funktion von den K Hash-Funktionen unterscheidet; und
Erhalten einer ersten Adresse über Berechnung auf der Grundlage des ersten Hash-Werts; und
das Verfahren, vor dem Schritt des Einstellens eines Parameters, entsprechend einem Bit, das durch jede der Adressen angegeben wird und das sich in einem mit der Adresse verknüpften Wort befindet, oder Auslesen eines Parameters, entsprechend einem Bit, das durch jede der Adressen angegeben wird und das sich in einem mit der Adresse verknüpften Wort befindet, zum Bestimmen, auf der Grundlage des ausgelesenen Parameters, ob der Schlüsselwert zu dem Bloom-Filter gehört, ferner Folgendes umfasst:
Bestimmen, auf der Grundlage der ersten Adresse und aus einer Vielzahl von Datenblöcken, die in dem Bloom-Filter enthalten sind, des mit der ersten Adresse verknüpften Zieldatenblocks.

3. Verfahren nach einem der Ansprüche 1 bis 2, wobei das Auslesen, auf der Grundlage der K Adressen, eines Parameters, entsprechend einem Bit, das durch jede der Adressen angegeben wird und das sich in einem mit der Adresse verknüpften Wort befindet, und Bestimmen, auf der Grundlage des ausgelesenen Parameters, ob der Schlüsselwert zu dem Bloom-Filter gehört, Folgendes umfasst:
Auslesen, auf der Grundlage der K Adressen, aus den in dem Zieldatenblock enthaltenen K Worten, des Parameters, entsprechend dem Bit, das durch jede der K Adressen angegeben wird und das sich in dem mit der Adresse verknüpften Wort befindet; und
wenn bestimmt wird, dass Parameter, entsprechend Bits, die durch die K Adressen angegeben werden und die sich in mit den K Adressen verknüpften Worten befinden, alle ersten Parameter sind, Bestimmen, dass der Schlüsselwert zu dem Bloom-Filter gehört.

4. Verfahren nach Anspruch 3, wobei das Verfahren ferner Folgendes umfasst:
wenn bestimmt wird, dass ein Parameter, entsprechend mindestens einem der Bits, die durch alle der K Adressen angegeben werden und die sich in mit den K Adressen verknüpften Worten befinden, ein zweiter Parameter ist, Bestimmen, dass der Schlüsselwert nicht zu dem Bloom-Filter gehört, wobei sich der zweite Parameter von dem ersten Parameter unterscheidet.

5. Verfahren nach einem der Ansprüche 1 bis 4, wobei das Bloom-Filter mindestens einen Datenblock umfasst, wobei jeder des mindestens einen Datenblocks K unabhängige Worte umfasst, die aufeinanderfolgende Adressen haben, wobei jedes der K Worte w Bits umfasst und w eine ganze Zahl größer gleich 1 ist.

6. Verfahren nach einem der Ansprüche 1 bis 5, wobei das Durchführen einer Hash-Operation an dem Schlüsselwert auf separate Weise durch Verwenden von K unterschiedlichen Hash-Funktionen, um K Hash-Werte über Berechnung zu erhalten, Folgendes umfasst:
Durchführen einer parallelen Hash-Funktionsberechnung an dem Schlüsselwert auf separate Weise durch Verwenden von K Hash-Berechnungseinheiten, um K Hash-Werte zu erhalten, wobei eine Hash-Berechnungseinheit ausgelegt ist zum Erhalten eines Hash-Werts auf der Grundlage des Schlüsselwerts.

7. Verfahren nach einem der Ansprüche 1 bis 6, wobei das Erhalten von K Adressen über Berechnung auf der Grundlage der K Hash-Werte Folgendes umfasst:
Durchführen von paralleler Berechnung auf der Grundlage der K Hash-Werte durch Verwenden von K Adressberechnungseinheiten, um die K Adressen über Berechnung zu erhalten.

8. Verfahren nach einem der Ansprüche 1 bis 7, wobei das Einstellen, auf der Grundlage der K Adressen, eines Parameters, entsprechend einem Bit, das durch jede der K Adressen angegeben wird und das sich in einem mit der Adresse verknüpften Wort befindet, Folgendes umfasst:
gleichzeitiges Einstellen, auf der Grundlage der K Adressen, der Parameter, entsprechend Bits, die durch alle der K Adressen angegeben werden und die sich in den mit den Adressen verknüpften Worten befinden; oder
das Auslesen eines Parameters, entsprechend einem Bit, das durch jede der Adressen angegeben wird und das sich in einem mit der Adresse verknüpften Wort befindet, und das Bestimmen, auf der Grundlage des ausgelesenen Parameters, ob der Schlüsselwert zu dem Bloom-Filter gehört, umfasst:
gleichzeitiges Auslesen, auf der Grundlage der K Adressen, der Parameter, entsprechend Bits, die durch alle der K Adressen angegeben werden und die sich in den mit den Adressen verknüpften Worten befinden; und
wenn bestimmt wird, dass die Parameter, entsprechend Bits, die durch alle der K Adressen angegeben werden und die sich in den mit den K Adressen verknüpften Worten befinden, alle die ersten Parameter sind, Bestimmen, dass der Schlüsselwert zu dem Bloom-Filter gehört.

9. Bloom-Filter-Einrichtung, die Folgendes umfasst:
eine Erhalteeinheit (10), ausgelegt zum Erhalten eines Schlüsselwerts;
eine erste Berechnungseinheit (20), ausgelegt zum Durchführen einer Hash-Operation an dem Schlüsselwert auf separate Weise durch Verwenden von K unterschiedlichen Hash-Funktionen, um K Hash-Werte zu erhalten;
eine zweite Berechnungseinheit (30), ausgelegt zum Erhalten von K Adressen durch Berechnung auf der Grundlage der K Hash-Werte, wobei jede der K Adressen eine eineindeutige Verknüpfung mit einem von K in einem Zieldatenblock enthaltenen Worten aufweist, unterschiedliche Adressen mit unterschiedlichen Worten verknüpft sind und eine der Adressen verwendet wird zum Angeben eines Bits in einem Wort, das mit der Adresse verknüpft ist; und
eine Verarbeitungseinheit (40), ausgelegt zum: auf der Grundlage der K Adressen, Einstellen eines Parameters, entsprechend einem Bit, das durch jede der K Adressen angegeben wird und das sich in einem mit der Adresse verknüpften Wort befindet, oder Auslesen eines Parameters, entsprechend einem Bit, das durch jede der K Adressen angegeben wird und das sich in einem mit der Adresse verknüpften Wort befindet, und Bestimmen, auf der Grundlage des ausgelesenen Parameters, ob der Schlüsselwert zu dem Bloom-Filter gehört;
**dadurch gekennzeichnet, dass**
die Verarbeitungseinheit insbesondere ausgelegt ist zum Durchführen des folgenden Schritts an einem Bit, das in jedem der K Worte, die in dem Zieldatenblock enthalten sind, enthalten ist, zum Einstellen eines Parameters des in dem Wort enthaltenen Bits:
Einstellen eines Parameters, entsprechend einem Bit, das durch eine der K Adressen angegeben wird und das sich in einem mit der Adresse verknüpften Wort befindet, auf einen ersten Parameter.

10. Bloom-Filter-Einrichtung nach Anspruch 9, wobei
die erste Berechnungseinheit ferner ausgelegt ist zum Durchführen einer Hash-Operation an dem Schlüsselwert durch Verwenden einer ersten Hash-Funktion, um einen ersten Hash-Wert durch Berechnung zu erhalten, wobei sich die erste Hash-Funktion von den K Hash-Funktionen unterscheidet;
die zweite Berechnungseinheit ferner ausgelegt ist zum Erhalten einer ersten Adresse über Berechnung auf der Grundlage des ersten Hash-Werts; und
die Einrichtung ferner Folgendes umfasst:
eine Bestimmungseinheit, ausgelegt zum Bestimmen, auf der Grundlage der ersten Adresse und aus einer Vielzahl von Datenblöcken, die in dem Bloom-Filter enthalten sind, des mit der ersten Adresse verknüpften Zieldatenblocks.

11. Bloom-Filter-Einrichtung nach einem der Ansprüche 9 bis 10, wobei die Erhalteeinheit ferner ausgelegt ist zum:
Auslesen, auf der Grundlage der K Adressen, aus den in dem Zieldatenblock enthaltenen K Worten, des Parameters, entsprechend dem Bit, das durch jede der K Adressen angegeben wird und das sich in dem mit der Adresse verknüpften Wort befindet; und
die Bestimmungseinheit insbesondere ausgelegt ist zum: wenn bestimmt wird, dass die Parameter, entsprechend Bits, die durch alle der K Adressen angegeben werden und die sich in den mit den K Adressen verknüpften Worten befinden, alle die ersten Parameter sind, Bestimmen, dass der Schlüsselwert zu dem Bloom-Filter gehört.

12. Bloom-Filter-Einrichtung nach Anspruch 11, wobei die Bestimmungseinheit ferner insbesondere ausgelegt ist zum: wenn bestimmt wird, dass ein Parameter, entsprechend mindestens einem der Bits, die durch die K Adressen angegeben werden und die sich in den mit den K Adressen verknüpften Worten befinden, ein zweiter Parameter ist, Bestimmen, dass der Schlüsselwert nicht zu dem Bloom-Filter gehört, wobei sich der zweite Parameter von dem ersten Parameter unterscheidet.

13. Bloom-Filter-Einrichtung nach einem der Ansprüche 9 bis 12, wobei das Bloom-Filter mindestens einen Datenblock umfasst, wobei jeder des mindestens einen Datenblocks K Worte umfasst, wobei jedes der K Worte w Bits umfasst und w eine ganze Zahl größer gleich 1 ist.

14. Bloom-Filter-Einrichtung nach einem der Ansprüche 9 bis 13, wobei die erste Berechnungseinheit K Hash-Berechnungseinheiten umfasst und die erste Berechnungseinheit insbesondere ausgelegt ist zum Durchführen einer parallelen Hash-Funktionsberechnung an dem Schlüsselwert auf separate Weise durch Verwenden der K Hash-Berechnungseinheiten, um die K Hash-Werte zu erhalten, wobei eine Hash-Berechnungseinheit ausgelegt ist zum Erhalten eines Hash-Werts auf der Grundlage des Schlüsselwerts.

15. Bloom-Filter-Einrichtung nach einem der Ansprüche 9 bis 14, wobei die zweite Berechnungseinheit K Adressberechnungseinheiten umfasst und die zweite Berechnungseinheit insbesondere ausgelegt ist zum Durchführen von paralleler Berechnung auf der Grundlage der K Hash-Werte durch Verwenden der K Adressberechnungseinheiten, um die K Adressen über Berechnung zu erhalten.

16. Bloom-Filter-Einrichtung nach einem der Ansprüche 9 bis 15, wobei die Verarbeitungseinheit insbesondere ausgelegt ist zum: gleichzeitigen Einstellen, auf der Grundlage der K Adressen, der Parameter, entsprechend Bits, die durch alle der K Adressen angegeben werden und die sich in den mit den Adressen verknüpften Worten befinden; oder
die Erhalteeinheit ferner ausgelegt ist zum: gleichzeitigen Auslesen, auf der Grundlage der K Adressen, der Parameter, entsprechend Bits, die durch die K Adressen angegeben werden und die sich in den mit den Adressen verknüpften Worten befinden; und
die Bestimmungseinheit ferner ausgelegt ist zum: wenn bestimmt wird, dass die Parameter, entsprechend Bits, die durch die K Adressen angegeben werden und die sich in den mit den K Adressen verknüpften Worten befinden, alle die ersten Parameter sind, Bestimmen, dass der Schlüsselwert zu dem Bloom-Filter gehört.

17. Routensuchsystem, wobei das Routensuchsystem eine Routingtabelle umfasst, wobei die Routingtabelle eine oder mehrere Präfixgruppen umfasst und wobei die Präfixgruppen unter Verwendung der Bloom-Filter-Einrichtung nach einem der Ansprüche 9 bis 16 gespeichert werden.

18. Pro-Fluss-Messsystem, wobei in dem Pro-Fluss-Messsystem ein SRAM-Modul einen Status von jedem Fluss unter Verwendung der Bloom-Filter-Einrichtung nach einem der Ansprüche 9 bis 16 aufzeichnet.

19. Tiefpaketuntersuchungssystem bzw. DPI-System, wobei das DPI-System eine oder mehrere Sicherheitsmerkmalgruppen umfasst, wobei die Sicherheitsmerkmalgruppe ein oder mehrere Sicherheitsmerkmale umfasst, und das eine oder die mehreren in der Sicherheitsmerkmalgruppe enthaltenen Sicherheitsmerkmale unter Verwendung der Bloom-Filter-Einrichtung nach einem der Ansprüche 9 bis 16 gespeichert werden.

20. Computerlesbares Speicherungsmedium, das eine Anweisung umfasst, wobei, wenn die Anweisung auf einem Bloom-Filter läuft, das Bloom-Filter veranlasst wird zum Durchführen des Datenverarbeitungsverfahrens für eine Bloom-Filter-Einrichtung nach einem der Ansprüche 1 bis 8.

## Revendications

1. Procédé de traitement de données mis en œuvre par ordinateur pour filtre de Bloom, comprenant les étapes consistant à :
obtenir (S101) une valeur de clé ;
effectuer (S102) une opération de hachage sur la valeur de clé séparément au moyen de K fonctions de hachage différentes, pour obtenir K valeurs de hachage ;
obtenir (S103) K adresses par un calcul basé sur les K valeurs de hachage, chacune des K adresses étant associée de manière biunivoque avec un mot parmi K mots contenus dans un bloc de données cible, des adresses différentes étant associées à des mots différents, et une des adresses étant utilisée pour indiquer un bit dans un mot associé à l'adresse ; et
à partir des K adresses, définir (S104) un paramètre correspondant à un bit qui est indiqué par chacune des adresses et qui se trouve dans un mot associé à l'adresse, ou
lire un paramètre correspondant à un bit qui est indiqué par chacune des adresses et
qui se trouve dans un mot associé à l'adresse, pour déterminer, d'après le paramètre lu, si la valeur de clé appartient au filtre de Bloom,
**caractérisé en ce que**
l'étape de définition d'un paramètre (S104) comprend :
l'exécution de l'étape suivante, sur un bit contenu dans chacun des K mots contenus dans le bloc de données cible, pour définir un paramètre correspondant au bit contenu dans le mot, consistant à :
définir un paramètre correspondant à un bit qui est indiqué par une des K adresses et qui se trouve dans un mot associé à l'adresse en tant que premier paramètre.

2. Procédé selon la revendication 1, le procédé comprenant également les étapes consistant à :
effectuer une opération de hachage sur la valeur de clé au moyen d'une première fonction de hachage, pour obtenir une première valeur de hachage par calcul, la première fonction de hachage étant différente des K fonctions de hachage ; et
obtenir une première adresse par un calcul basé sur la première valeur de hachage ; et avant l'étape de définition d'un paramètre correspondant à un bit qui est indiqué par chacune des adresses et qui se trouve dans un mot associé à l'adresse, ou de lecture d'un paramètre correspondant à un bit qui est indiqué par chacune des adresses et qui se trouve dans un mot associé à l'adresse, pour déterminer, d'après le paramètre lu, si la valeur de clé appartient au filtre de Bloom, le procédé comprenant également l'étape consistant à :
déterminer, d'après la première adresse et à partir d'une pluralité de blocs de données contenus dans le filtre de Bloom, le bloc de données cible associé à la première adresse.

3. Procédé selon l'une des revendications 1 et 2, dans lequel la lecture, à partir des K adresses, d'un paramètre correspondant à un bit qui est indiqué par chacune des adresses et qui se trouve dans un mot associé à l'adresse, et la détermination, d'après le paramètre lu, du fait que la valeur de clé appartient ou non au filtre de Bloom, consistent en :
à partir des K adresses, lire, à partir des K mots contenus dans le bloc de données cible, le paramètre correspondant au bit qui est indiqué par chacune des K adresses et qui se trouve dans le mot associé à l'adresse ; et
lorsqu'il est déterminé que les paramètres correspondant aux bits qui sont indiqués par les K adresses et qui se trouvent dans des mots associés aux K adresses sont tous les premiers paramètres, déterminer que la valeur de clé appartient au filtre de Bloom.

4. Procédé selon la revendication 3, le procédé comprenant également l'étape consistant à :
lorsqu'il est déterminé qu'un paramètre correspondant à au moins un des bits qui sont indiqués par toutes les K adresses et qui se trouvent dans les mots associés aux K adresses est un deuxième paramètre, déterminer que la valeur de clé n'appartient pas au filtre de Bloom, le deuxième paramètre étant différent du premier paramètre.

5. Procédé selon l'une quelconque des revendications 1 à 4, dans lequel le filtre de Bloom comprend au moins un bloc de données, chacun desdits au moins un bloc de données comprenant K mots indépendants ayant des adresses consécutives, chacun des mots K comprenant w bits, w étant un entier supérieur ou égal à 1.

6. Procédé selon l'une quelconque des revendications 1 à 5, dans lequel l'exécution d'une opération de hachage sur la valeur de clé séparément au moyen de K fonctions de hachage différentes, pour obtenir K valeurs de hachage par calcul, comprend l'étape consistant à :
effectuer un calcul de fonction de hachage parallèle sur la valeur de clé séparément au moyen de K unités de calcul de hachage, pour obtenir les K valeurs de hachage, une unité de calcul de hachage étant configurée pour obtenir une valeur de hachage basée sur la valeur de clé.

7. Procédé selon l'une quelconque des revendications 1 à 6, dans lequel l'obtention des K adresses par calcul basées sur les K valeurs de hachage comprend l'étape consistant à :
effectuer un calcul parallèle basé sur les K valeurs de hachage au moyen de K unités de calcul d'adresse, pour obtenir les K adresses par calcul.

8. Procédé selon l'une quelconque des revendications 1 à 7, dans lequel la définition, à partir des K adresses, d'un paramètre correspondant à un bit qui est indiqué par chacune des K adresses et qui se trouve dans un mot associé à l'adresse, comprend l'étape consistant à :
à partir des K adresses, définir simultanément les paramètres correspondant aux bits qui sont indiqués par toutes les K adresses et qui se trouvent dans les mots associés aux adresses ; ou
la lecture d'un paramètre correspondant à un bit qui est indiqué par chacune des adresses et qui se trouve dans un mot associé à l'adresse, et la détermination, d'après le paramètre lu, du fait que la valeur de clé appartient ou non au filtre de Bloom, consistent en :
à partir des K adresses, lire simultanément les paramètres correspondant aux bits qui sont indiqués par toutes les K adresses et qui se trouvent dans les mots associés aux adresses ; et
lorsqu'il est déterminé que les paramètres correspondant aux bits qui sont indiqués par toutes les K adresses et qui se trouvent dans les mots associés aux K adresses sont tous les premiers paramètres, déterminer que la valeur de clé appartient au filtre de Bloom.

9. Appareil à filtre de Bloom, comprenant :
une unité d'obtention (10), configurée pour obtenir une valeur de clé ;
une première unité de calcul (20), configurée pour effectuer une opération de hachage sur la valeur de clé séparément au moyen de K fonctions de hachage différentes, pour obtenir K valeurs de hachage ;
une deuxième unité de calcul (30), configurée pour obtenir K adresses par un calcul basé sur les K valeurs de hachage, chacune des K adresses étant associée de manière biunivoque avec un mot parmi K mots contenus dans un bloc de données cible, des adresses différentes étant associées à des mots différents, et une des adresses étant utilisée pour indiquer un bit dans un mot associé à l'adresse ; et
une unité de traitement (40), configurée pour : à partir des K adresses, définir un paramètre correspondant à un bit qui est indiqué par chacune des K adresses et qui se trouve dans un mot associé à l'adresse, ou lire un paramètre correspondant à un bit qui est indiqué par chacune des K adresses et qui se trouve dans un mot associé à l'adresse, et déterminer, d'après le paramètre lu, si la valeur de clé appartient au filtre de Bloom ;
**caractérisé en ce que**
l'unité de traitement est spécifiquement configurée pour effectuer l'étape suivante, sur un bit contenu dans chacun des K mots contenus dans le bloc de données cible, pour définir un paramètre du bit contenu dans le mot, consistant à :
définir un paramètre correspondant à un bit qui est indiqué par une des K adresses et qui se trouve dans un mot associé à l'adresse en tant que premier paramètre.

10. Appareil à filtre de Bloom selon la revendication 9, dans lequel la première unité de calcul est également configurée pour effectuer une opération de hachage sur la valeur de clé au moyen d'une première fonction de hachage, pour obtenir une première valeur de hachage par calcul, la première fonction de hachage étant différente des K fonctions de hachage ;
la deuxième unité de calcul est également configurée pour obtenir une première adresse par un calcul basé sur la première valeur de hachage ; et
l'appareil comprenant également :
une unité de détermination, configurée pour déterminer, d'après la première adresse et à partir d'une pluralité de blocs de données contenus dans le filtre de Bloom, le bloc de données cible associé à la première adresse.

11. Appareil à filtre de Bloom selon l'une quelconque des revendications 9 et 10, dans lequel l'unité d'obtention est également configurée pour : à partir des K adresses, lire, à partir des K mots contenus dans le bloc de données cible, le paramètre correspondant au bit qui est indiqué par chacune des K adresses et qui se trouve dans le mot associé à l'adresse ; et
l'unité de détermination est spécifiquement configurée pour : lorsqu'il est déterminé que les paramètres correspondant aux bits qui sont indiqués par toutes les K adresses et qui se trouvent dans les mots associés aux K adresses sont tous les premiers paramètres, déterminer que la valeur de clé appartient au filtre de Bloom.

12. Appareil à filtre de Bloom selon la revendication 11, dans lequel l'unité de détermination est également spécifiquement configurée pour : lorsqu'il est déterminé qu'un paramètre correspondant à au moins un des bits qui sont indiqués par les K adresses et qui se trouvent dans les mots associés aux K adresses est un deuxième paramètre, déterminer que la valeur de clé n'appartient pas au filtre de Bloom, le deuxième paramètre étant différent du premier paramètre.

13. Appareil à filtre de Bloom selon l'une quelconque des revendications 9 à 12, dans lequel le filtre de Bloom comprend au moins un bloc de données, chacun desdits au moins un bloc de données comprenant K mots, chacun des mots K comprenant w bits, w étant un entier supérieur ou égal à 1.

14. Appareil à filtre de Bloom selon l'une quelconque des revendications 9 à 13, dans lequel la première unité de calcul comprend K unités de calcul de hachage, et la première unité de calcul est spécifiquement configurée pour effectuer un calcul de fonction de hachage parallèle sur la valeur de clé séparément au moyen des K unités de calcul de hachage, pour obtenir les K valeurs de hachage, une unité de calcul de hachage étant configurée pour obtenir une valeur de hachage basée sur la valeur de clé.

15. Appareil à filtre de Bloom selon l'une quelconque des revendications 9 à 14, dans lequel la deuxième unité de calcul comprend K unités de calcul d'adresse, et la deuxième unité de calcul est spécifiquement configurée pour effectuer un calcul parallèle basé sur les K valeurs de hachage au moyen des K unités de calcul d'adresse, pour obtenir les K adresses par calcul.

16. Appareil à filtre de Bloom selon l'une quelconque des revendications 9 à 15, dans lequel l'unité de traitement est spécifiquement configurée pour : à partir des K adresses, définir simultanément les paramètres correspondant aux bits qui sont indiqués par toutes les K adresses et qui se trouvent dans les mots associés aux adresses ; ou
l'unité d'obtention est également configurée pour : à partir des K adresses, lire simultanément les paramètres correspondant aux bits qui sont indiqués par les K adresses et qui se trouvent dans les mots associés aux adresses ; et
l'unité de détermination est également configurée pour : lorsqu'il est déterminé que les paramètres correspondant aux bits qui sont indiqués par les K adresses et qui se trouvent dans les mots associés aux K adresses sont tous les premiers paramètres, déterminer que la valeur de clé appartient au filtre de Bloom.

17. Système de recherche de chemin comprenant une table d'acheminement, la table d'acheminement comprenant un ou plusieurs groupes de préfixes, et les groupes de préfixes étant stockés au moyen de l'appareil à filtre de Bloom selon l'une quelconque des revendications 9 à 16.

18. Système de mesure flux par flux dans lequel un module SRAM enregistre un statut de chaque flux au moyen de l'appareil à filtre de Bloom selon l'une quelconque des revendications 9 à 16.

19. Système d'inspection approfondie des paquets, DPI, comprenant un ou plusieurs groupes de fonctions de sécurité, le groupe de fonctions de sécurité comprenant une ou plusieurs fonctions de sécurité, et lesdites une ou plusieurs fonctions de sécurité comprises dans le groupe de fonctions de sécurité étant stockées au moyen de l'appareil à filtre de Bloom selon l'une quelconque des revendications 9 à 16.

20. Support de stockage lisible par ordinateur comprenant une instruction, l'instruction, lorsqu'elle est exécutée sur un filtre de Bloom, amenant le filtre de Bloom à effectuer le procédé de traitement de données pour appareil à filtre de Bloom selon l'une quelconque des revendications 1 à 8.
